# EUROPÄISCHE PATENTSCHRIFT

(11) **EP 1 197 762 B1**
(45) Veröffentlichungstag und Bekanntmachung des Hinweises auf die Patenterteilung: **17.05.2006**
(21) Anmeldenummer: 01810963.7
(22) Anmeldetag: 03.10.2001
(51) Int. Cl.: G01S 13/88, G01S 13/90

(54) **Untergrundergründender Radardetektor für ein Handwerkzeuggerät**
Underground detecting radar for hand tool
Détecteur sous-sol à radar pour outil à main

(30) Priorität: 13.10.2000 DE 10050655
(43) Veröffentlichungstag der Anmeldung: 17.04.2002
(73) Patentinhaber: HILTI Aktiengesellschaft, 9494 Schaan (LI)
(72) Erfinder: Liedtke, Stefan, Broken Arrow, OK 74012 (US); Harald, Schmitzer, 88142 Wasserburg (DE); Ewen, John, 9487 Bendern (LI); Dass, Klaus, 9468 Sax (CH)
(74) Vertreter: Wildi, Roland

(56) Entgegenhaltungen:
- EP-A- 0 919 833
- US-A- 5 051 748
- US-A- 5 339 080
- US-A- 5 512 834
- US-A- 5 541 605
- US-A- 5 835 054
- US-A- 5 900 833
- US-A- 6 100 839

## Beschreibung

Die Erfindung bezeichnet einen untergrundergründenden Radardetektor für ein Handwerkzeuggerät wie einen Bohrhammer oder Meiselhammer.

Beim Bearbeiten von Mauerwerk mit eingebetteten elektrischen Leitungen, Kunststoffleitungen usw. sowie von eisenarmiertem Beton durch ein Handwerkzeuggerät ist die Kenntnis des Vorhandenseins, der Art und der relativen Lage von Leitungen oder Armierungseisen zum Werkzeug wichtig, um einerseits diese nicht zu beschädigen und andererseits zweckentsprechende Bearbeitungsvorgänge ausführen zu können, bspw. das Erstellen von Dübellöschern mit einem Mindestabstand zu Leitungen oder Armierungseisen.

Nach der US5541605 muss ein im Ultra-Weitbandbereich betriebener untergrundergründender Radardetektor zur Detektion von Armierungseisen in Beton flächig über die Oberfläche bewegt werden.

Nach der US5051748 weist ein transportabler untergrundergründender Radardetektor im Mikrowellenbereich zur Detektion von Armierungseisen in Beton ein Antennenarray mit entlang einer Richtung beabstandeten Wellenleitern auf, deren zugeordnete Lochantennen direkt ein zeilenweises Abbild erzeugen, welches in Verbindung mit einer Bewegung des Antennenarrays quer zur Richtung des Arrays und eines Computers ein flächiges Abbild des eingebetteten Objektes erzeugt, das über ein Bildausgabegerät dargestellt wird.

Nach der US5900833 kann ein tragbarer Radardetektor mit synthetischen Antennen (SAR), deren Signale jeweils in Signalprozessoren verarbeitet werden, ein dreidimensionales Abbild von im Untergrund eingebetteten Objekten wie armierten Beton liefern, welches über ein Bildausgabegerät dargestellt wird. Die einzelnen, nicht notwendig in Reihe angeordneten, voneinander beabstandeten Antennen werden zur Erzeugung einer synthetischen Apertur mit dem Radardetektor quer zur Reihe der Antennen bewegt.

Die US 5512834 offenbart einen transportablen untergrundergründenden Radardetektor zur Detektion von elektrischen Leitungen, Kunststoffleitungen und Armierungseisen bei der Erstellung von Bohrlöchern. Der Radardetektor sendet und empfängt schmalbandig periodisch modulierte elektromagnetische Wellen in den zu ergründenden Untergrund mit im Nahfeldbereich angeordneten Objekten. Der Radardetektor weist durch die Auswertung der Impulsformen sowie der Geometrie und des Abstandes der zugeordneten Antennen zweier kompletter Detektoren oder der Empfangsantennen eines gemeinsamen Senders eine Flächenauflösung auf sowie ermöglicht eine Tiefenjustierung. In Abhängigkeit vom Detektionsergebnis wird ein Handwerkzeuggerät in Form eines Nagelgerätes, an welchem der Radardetektor befestigt ist, automatisch über den Nagelspender gesteuert. Über die zwei beabstandeten Empfangsantennen können dicht benachbarte eingebettete Objekte, welche bspw. in Gittern angeordnet sind, nicht hinreichend sicher orientiert werden. Ebenfalls ist keine Aussage zur Orientierung oder Einbettungstiefe der eingebetteten Objekte möglich.

Nach der US5339080 weist ein, eine Fläche abrasternd, scannend bewegter Radardetektor zur Ergründung von im Untergrund eingebetteten Objekten drei Antennen einer Antennenanordnung für elektromagnetische Wellen im Hochfrequenzbereich auf, die jeweils einzeln schaltbar mit je einer Sende/Empfangseinheit über mindestens einen zeitgesteuerten Signalprozessor zur paarweise zeitlichen Korrelation der demodulierten Signale mit einer Auswerteeinheit für SAR zur Kombination miteinander informationsübertragend verbunden sind.

Zudem sind nach der US5835054 bei einem, eine Fläche abrastemd, scannend bewegten Radardetektor in einer Antennenanordnung viele Antennen linear versetzt, nach der US6100839 auch zweidimensional oder dreidimensional versetzt angeordnet.

Die EP0919833 zeigt einen Radardetektor zur Ergründung von im Untergrund eingebetteten Objekten, dessen Antennen einer NxM - Antennenanordnung für elektromagnetische Wellen im Hochfrequenzbereich mit zumindest einer Sende/Empfangseinheit über mindestens einen zeitgesteuerten Signalprozessor zur paarweise zeitlichen Korrelation der demodulierten Signale mit einer Auswerteeinheit für SAR zur Kombination miteinander und einer Anzeigeeinheit informationsübertragend verbunden sind, wobei die Antennen jeweils einzeln schaltbar mit zumindest einer Sende/Empfangseinheit verbunden sind sowie mit ihren Positionen zusammen eine Fläche aufspannen, indem parallel zueinander polarisierten Antennen jeweils in einer, zueinander kreuzförmig angeordneter, Reihe beabstandet angeordnet sind. Das optional antennenfreie Zentrum der kreuzförmigen Anordnung ist nicht als Freiraum zur Anwendung eines Handwerkzeuggerätes ausgebildet.

Die Aufgabe der Erfindung besteht in der Realisierung eines einfachen, an ein Handwerkzeuggerät befestigbaren, untergrundergründenden Radardetektors zur Detektion dicht benachbarter eingebetteter Objekte.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein untergrundergründender Radardetektor mindestens drei, mit ihren Positionen zusammen eine Fläche aufspannende, Antennen für elektromagnetische Wellen im Hochfrequenzbereich auf, welche jeweils einzeln mit Sende/Empfangseinheiten verbunden sind, deren demodulierte Signale in einem zeitgesteuerten Signalprozessor jeweils paarweise zueinander zeitlich korrelierbar und miteinander kombiniert in einer Auswerteeinheit für SAR auswertbar sind, welche mit einer Anzeigeeinheit verbunden ist.

Durch die paarweise zeitliche Korrelation jeweils zweier der in einer Fläche angeordneten mindestens drei Antennen und der miteinander kombinierten Auswertung ist die räumliche Lage eingebetteter Objekte bestimmbar, ohne dabei den Radardetektor zu bewegen.

Vorteilhaft werden durch eine Steuereinheit zeitlich versetzt jeweils genau zwei Antennen aus den mindestens drei Antennen als Sende-Empfangs-Antennenpaar mit dem Radarsender bzw. mit dem Radarempfänger schaltbar verbunden, wodurch nur ein Radarsender und ein Radarempfänger benötigt werden.

Vorteilhaft sind zumindest zwei Antennen unterschiedlich zueinander polarisiert, wodurch durch die paarweise zeitliche Korrelation und miteinander kombinierte Auswertung die Orientierung eines länglichen Objekts bestimmbar ist.

Vorteilhaft sind eine zahlenmässig erste Hälfte und eine zweite Hälfte der Antennen senkrecht zueinander polarisiert. Durch die bei senkrecht zueinander polarisierten Antennen weitgehenden Entkopplung wird die miteinander kombinierte Auswertung der paarweise zeitlichen Korrelation vereinfacht.

Vorteilhaft sind die parallel zueinander polarisierten Antennen jeweils in einer Reihe beabstandet angeordnet und die beiden Reihen weiter vorteilhaft kreuzförmig angeordnet. Entlang jeder Reihe kann das schaltbar mit dem Radarsender bzw. mit dem Radarempfänger verbundene Sende-Empfangs-Antennenpaar geschaltet bewegt werden.

Vorteilhaft sind in zumindest einer Reihe zumindest drei zueinander parallel polarisierte Antennen angeordnet, wodurch zwei Sende-Empfangs-Antennenpaare mit einem unterschiedlichen Abstand zueinander schaltbar sind. Dadurch ist die Tiefe eingebetteter Objekte unabhängig von der Ausbreitungsgeschwindigkeit der Radarwellen im Untergrund bestimmbar.

Vorteilhaft sind die in zwei Reihen kreuzförmig angeordneten Antennen zentralsymmetrisch angeordnet, wodurch die Auswertung vereinfacht wird.

Vorteilhaft befindet sich bei den zentralsymmetrisch kreuzförmig angeordneten Antennen im Zentrum ein Freiraum, durch welchen ein Werkzeug hindurchführbar ist.

Vorteilhaft wird durch Auswertung des Vorzeichens der reflektierten Radarwelle zwischen unterschiedlichen Materialen, bspw. zwischen Kunststoff und Eisen, der eingebetteten Objekte unterschieden und dies angezeigt, bspw. über eine Leuchtdiode (LED).

Vorteilhaft ist die Auswerteeinheit als neuronales Netz ausgebildet, welches die Vielzahl der miteinander kombiniert auszuwertenden, paarweise zeitlichen Korrelation als Eingangsgrössen in eine zahlenmässig kleine Anzahl von Klassifikationen abbildet, die weiter vorteilhaft unterteilt sind in:
- zentral punktförmig
- senkrecht länglich
- schräg länglich
- waagerecht länglich
- zentral gekreuzt
   sowie:

- objektfrei
   und diese angezeigt, bspw. über je eine LED.

Vorteilhaft wird die Tiefe des detektierten Objekts über eine diskrete Skala angezeigt.

Vorteilhaft werden alle Informationen zusammen in einem kleinen graphischen Display angezeigt.

Vorteilhaft wird vom Handwerkzeuggerät ein Parameter, wie maximale Bohrtiefe, an die Auswerteeinheit übergeben und von dieser bei der Auswertung berücksichtigt.

Vorteilhaft werden von der Auswerteeinheit die Klassifikationen als Steuersignal an das Handwerkzeuggerät ausgegeben und von diesem zur Freigabe oder Sperrung eines Bearbeitungsvorgangs, bspw. des Bohrens, benutzt.

Die Erfindung wird bezüglich eines vorteilhaften Ausführungsbeispiels näher erläutert mit:
Fig. 1 als Antennenanordnung
Fig. 2 als Prinzipschema des Radardetektors

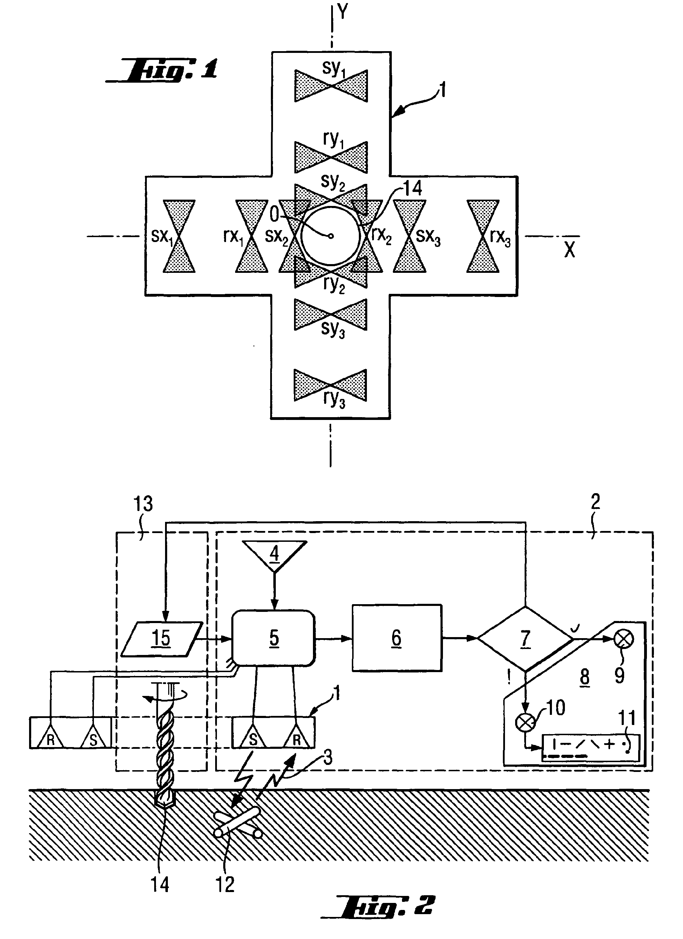

Nach Fig.1 weist eine Antennenanordnung 1 sechs, mit ihren Positionen zusammen eine Fläche aufspannende, Antennenpaare sx-rx bzw sy-ry auf. Eine zahlenmässige erste Hälfte der Antennen sx, rx und eine zweite Hälfte der Antennen sy, ry sind senkrecht zueinander polarisiert. Die parallel zueinander polarisierten Antennen sx, rx bzw. sy, ry sind jeweils in einer Reihe X bzw. Y beabstandet angeordnet. Die beiden Reihen X und Y sind kreuzförmig zueinander angeordnet. Entlang jeder Reihe X, Y kann ein Sende-Empfangspaar sxᵢ-rxⱼ mit i,j=1,2,3 geschaltet bewegt werden. In der Reihe X sind sechs zueinander parallel polarisierte Antennen sxᵢ, rxᵢ angeordnet, wodurch sechs Sende-Empfangsantennenpaare mit drei unterschiedlichem Abständen schaltbar sind. Die in den zwei Reihen X, Y kreuzförmig angeordneten Antennen sx, rx, sy, ry sind zentralsymmetrisch angeordnet. Im Zentrum O befindet sich ein Freiraum.

Nach Fig. 2 weist ein untergrundergründender Radardetektor 2 für elektromagnetische Wellen 3 im Hochfrequenzbereich die Antennenanordnung 1 mit Sendeantennen S und Empfangsantennen R auf, welche durch eine zeitgesteuerte Steuereinheit 4 zeitlich versetzt jeweils einzeln mit einer Sende/Empfangseinheit 5 verbunden sind, welche mit einem Signalprozessor 6 verbunden ist, der wiederum mit einer als neuronales Netz realisierten Auswerteeinheit 7 für SAR verbunden ist, welche mit einer Anzeigeeinheit 8 verbunden ist, die für die Klassifikation "objektfrei" eine grüne LED 9 und ansonsten eine rote LED 10, verbunden mit einem graphischen Display 11 für das Material, die Tiefe und die Klassifizierung eines eingebetteten Objekts 12 ansteuert. Ein mit dem Radardetektor 1 verbundenes Handwerkzeuggerät 13 in Form einer Bohrmaschine mit einem sich durch die Antennenanordnung 1 hindurch erstreckenden Werkzeug 14 beinhaltet eine Geräteelektronik 15, die mit dem Radardetektor 2 bidirektional verbunden ist.

## Patentansprüche

1. Radardetektor zur Ergründung von im Untergrund eingebetteten Objekten (12), dessen zumindest drei Antennen (sx, rx, sy, ry) einer Antennenanordnung (1) für elektromagnetische Wellen (3) im Hochfrequenzbereich mit zumindest einer Sende/Empfangseinheit (5) über mindestens einen zeitgesteuerten Signalprozessor (6) zur paarweise zeitlichen Korrelation der demodulierten Signale mit einer Auswerteeinheit (7) für SAR zur Kombination miteinander und einer Anzeigeeinheit (8) informationsübertragend verbunden sind, wobei
diese Antennen (sx, rx, sy, ry) jeweils einzeln schaltbar mit zumindest einer Sende/Empfangseinheit verbunden sind und mit ihren Positionen zusammen eine Fläche aufspannen, indem die parallel zueinander polarisierten Antennen (sx + rx; sy + ry) jeweils in einer, zueinander kreuzförmig angeordneter, Reihe (X, Y) beabstandet angeordnet sind, **dadurch gekennzeichnet, dass** die zueinander kreuzförmig angeordneten Reihen (X, Y) im Zentrum (O) einen zur Anwendung eines Handwerkzeuggerätes (13) ausgebildeten Freiraum aufweisen.

2. Radardetektor nach Anspruch 1, **dadurch gekennzeichnet, dass** durch eine Steuereinheit (4) zeitlich versetzt jeweils genau zwei Antennen (S, R) aus den mindestens drei Antennen (sx, rx, sy, ry) als Sende-Empfangs-Antennenpaar mit einem Radarsender bzw. mit einem Radarempfänger schaltbar verbunden sind.

3. Radardetektor nach Anspruch 1 oder Anspruch 2, **dadurch gekennzeichnet, dass** zumindest zwei Antennen (rx /rx; sx / sy) unterschiedlich zueinander polarisiert sind.

4. Radardetektor nach einem der Ansprüche 1 bis 3, **dadurch gekennzeichnet, dass** in zumindest einer Reihe (X, Y) zumindest drei zueinander parallel polarisierte Antennen (sxᵢ, rxᵢ; syᵢ-ryᵢ mit i=1, 2, 3) angeordnet sind.

5. Radardetektor nach einem der Ansprüche. 1 bis 4, **dadurch gekennzeichnet, dass** die Auswerteeinheit (7) als ein neuronales Netz ausgebildet ist.

6. Radardetektor nach einem der Ansprüche 1 bis 5, **dadurch gekennzeichnet, dass** die Anzeigeeinheit (8) als LED (9, 10) und/oder graphischem Display /11) zur Anzeige des Materials, der Klassifikationen und der Tiefe der eingebetteten Objekte (12) ausgebildet ist.

7. Radardetektor nach einem der Ansprüche 1 bis 6, **dadurch gekennzeichnet, dass** ein Handwerkzeuggerät (13) mit einem durch die Antennenanordnung (1) hindurchgreifenden Werkzeug (14) zugeordnet befestigt ist.

8. Radardetektor nach Anspruch 7, **dadurch gekennzeichnet, dass** eine Elektronik (15) des Handwerkzeuggerätes (13) zur Freigabe oder Sperrung eines Bearbeitungsvorgangs mit der Auswerteeinheit (7) verbunden ist.

## Claims

1. Radar detector for detecting objects (12) embedded in a base, its at least three antennae (sx, rx, sy, ry) of an antennae array (1) for electromagnetic waves (3) in the high-frequency range being in an information transmitting manner connected to at least one transmit/receive unit (5) via at least one time-controlled signal processor (6) for paired temporal correlation of demodulated signals with an evaluation unit (7) for SAR for combination relative to each other and a display unit (8), and these antennae (sx, rx, sy, ry) are individually switchably connected to at least one transmit/receive unit, covering with their joint positions a surface wherein parallel polarized antennae (sx + rx; sy + ry) are respectively arranged spaced in a crosshaped row (X, Y), **characterised in that** the crosshaped rows (X, Y) comprise in the centre (O) a vacant space for use of a hand tool apparatus (13).

2. Radar detector according to Claim 1, **characterised in that** by way of a control unit (4) exactly two temporally offset respective antennae (S, R) of the at least three antennae (sx, rx, sy, ry) are switchably connected as transmit/receive pair of antennae to a radar transmitter or a radar receiver respectively.

3. Radar detector according to Claim 1 or Claim 2, **characterised in that** at least two antennae (rx/rx; sx/sy) are differently polarized relative to one another.

4. Radar detector according to one of Claims 1 to 3, **characterised in that** in at least one row (X, Y) are arranged at least three parallel polarized antennae (sx, rx; syᵢ-ryᵢ; where i=1, 2, 3).

5. Radar detector according to one of Claims 1 to 4, **characterised in that** the evaluation unit (7) is designed as a neuronal net.

6. Radar detector according to one of Claims 1 to 5, **characterised in that** the display unit (8) is designed to be an LED (9, 10) and/or graphic display (11) for indicating the material, classification and depth of embedded objects (12).

7. Radar detector according to one of Claims 1 to 6, **characterised in that** a hand tool apparatus (13) is mounted by a tool (14) which reaches through the antennae array (1).

8. Radar detector according to Claim 7, **characterised in that** an electronics (15) of the hand tool apparatus (13) is connected to the evaluation unit (7) for releasing or blocking a processing operation.

## Revendications

1. Détecteur radar pour le repérage d'objets (12) noyés dans une sous-surface, dont les antennes, au nombre d'au moins trois, (sx, rx, sy, ry) d'un agencement d'antennes (1) pour ondes électromagnétiques (3) dans la gamme des hautes fréquences, avec au moins une unité d'émission/réception (5), sont connectées, avec transmission de données, par l'intermédiaire d'au moins un processeur de signal temporisé (6) pour la corrélation temporelle par paires des signaux démodulés, à une unité d'analyse (7) pour SAR pour les combiner mutuellement et à une unité d'affichage (8), ces antennes (sx, rx, sy, ry) étant connectées à au moins une unité d'émission/réception avec possibilité de commutation individuelle et couvrant ensemble, avec leurs positions, une surface par le fait que les antennes polarisées parallèlement entre elles (sx + rx ; sy + ry) sont disposées à distance les unes des autres dans des rangées respectives (X, Y) disposées en croix, **caractérisé en ce que** les rangées (X, Y) disposées en croix comportent au centre (O) un espace libre conformé pour mettre en oeuvre un outil à main (13).

2. Détecteur radar selon la revendication 1, **caractérisé en ce que**, par l'intermédiaire d'une unité de commande (4), exactement deux antennes (S, R) parmi les antennes au nombre d'au moins trois (sx, rx, sy, ry) sont connectées de manière temporisée et commutable, en tant que paire d'antennes d'émission-réception, à un émetteur radar, respectivement à un récepteur radar.

3. Détecteur radar selon la revendication 1 ou la revendication 2, **caractérisé en ce qu'**au moins deux antennes (rx/rx ; sx/sy) sont polarisées de manière différente l'une de l'autre.

4. Détecteur radar selon une des revendications 1 à 3, **caractérisé en ce que** dans au moins une rangée (X, Y) sont disposées au moins trois antennes polarisées parallèlement entre elles (sxᵢ, rxᵢ ; syᵢ-ryᵢ avec i = 1, 2, 3).

5. Détecteur radar selon une des revendications 1 à 4, **caractérisé en ce que** l'unité d'analyse (7) est conformée en réseau neuronal.

6. Détecteur radar selon une des revendications 1 à 5, **caractérisé en ce que** l'unité d'affichage (8) est conformée en DEL (9, 10) et/ou en afficheur graphique (11) pour afficher le matériau, les classifications et la profondeur des objets noyés (12).

7. Détecteur radar selon une des revendications 1 à 6, **caractérisé en ce qu'**un outil à main (13) est fixé de manière associée à un outil (14) traversant l'agencement d'antennes (1).

8. Détecteur radar selon la revendication 7, **caractérisé en ce qu'**une électronique (15) de l'outil à main (13) est connectée à l'unité d'analyse (7) pour autoriser ou interdire une intervention.
